# EUROPEAN PATENT APPLICATION

(11) **EP 4 686 178 A1**
(43) Date of publication of application: **28.01.2026**
(21) Application number: 24787812.7
(22) Date of filing: 22.02.2024
(51) Int. Cl.: H04L 67/51

(54) **SERVICE MANAGEMENT METHOD AND APPARATUS**

(30) Priority: 12.04.2023 CN 202310389014; 31.07.2023 CN 202310952516
(71) Applicant: Huawei Cloud Computing Technologies Co., Ltd., Guiyang, Guizhou 550025 (CN)
(72) Inventor: WENG, Xinyu, Guiyang, Guizhou 550025 (CN); HOU, Weilong, Guiyang, Guizhou 550025 (CN)
(74) Representative: Pfenning, Meinig & Partner mbB
(86) International application number: PCT/CN2024/078117
(87) International publication number: WO 2024/212706

(57) **Abstract**

Embodiments of this application relate to the field of cloud computing technologies, and provide a service management method and an apparatus, to manage a service more conveniently. The method includes: publishing a composition service from a cloud management platform, where the composition service includes at least two associated cloud services; obtaining a management policy of the composition service from the cloud management platform, where the management policy of the composition service includes an association relationship between the at least two associated cloud services and/or a lifecycle policy of the at least two associated cloud services; and providing the composition service for a tenant, and managing the composition service based on the management policy of the composition service when the tenant performs an operation on the composition service.

## Description

This application claims priorities to Chinese Patent Application No. 202310389014.6, filed with the China National Intellectual Property Administration on April 12, 2023 and entitled "RESOURCE PROVISIONING METHOD, APPARATUS, AND SYSTEM", and to Chinese Patent Application No. 202310952516.5, filed with the China National Intellectual Property Administration on July 31, 2023 and entitled "SERVICE MANAGEMENT METHOD AND APPARATUS", both of which are incorporated herein by reference in their entireties.

### TECHNICAL FIELD

Embodiments of this application relate to the field of cloud computing technologies, and in particular, to a service management method and an apparatus.

### BACKGROUND

With development of information communication technologies, a tenant usually uses a plurality of services for collaboration to meet a business requirement. In a multi-service scenario, how to manage the plurality of services becomes an urgent problem to be resolved.

A cloud service scenario is used as an example. Currently, after purchasing a plurality of cloud services in a cloud store, a tenant integrates the plurality of services into one cloud service via an integration service (a service used to integrate the plurality of services into one composition service). In this way, the integrated service is managed as one cloud service.

However, in the foregoing method, lifecycles of different cloud services in the integrated service may be inconsistent. For example, for different cloud services, expiration times of lifecycles are different. Some cloud services are expired, and some cloud services are not expired. In this case, cloud service management encounters a challenge.

### SUMMARY

Embodiments of this application provide a service management method and an apparatus, to manage a cloud service more conveniently.

To achieve the foregoing objectives, the following technical solutions are used in embodiments of this application.

According to a first aspect, an embodiment of this application provides a service management method. The method is applied to a cloud marketplace, and includes: publishing a composition service from a cloud management platform (it should be understood that a cloud service provider or a cloud service provider provides a cloud service on the cloud management platform), where the composition service includes at least two associated cloud services; obtaining a management policy of the composition service from the cloud management platform, where the management policy of the composition service includes an association relationship between the at least two associated cloud services and/or a lifecycle policy of the at least two associated cloud services; and providing the composition service for a tenant, and managing the composition service based on the management policy of the composition service when the tenant performs an operation on the composition service.

In conclusion, in the service management method provided in this embodiment of this application, complex service integration does not need to be performed on a plurality of cloud services. Instead, the management policy of the composition service including the plurality of cloud services is obtained, and the composition service is managed based on the management policy. Actually, the plurality of cloud services are still independent services, and the plurality of cloud services are equivalent to the composition service based on the management policy, so that cloud services can be managed more conveniently. In addition, in the method, a framework capability of compositing services is provided. There is no need to perform complex service integration, and there is no need to perform service composition scenario by scenario, so that service composition efficiency can be improved.

In a possible implementation, the obtaining the management policy of the composition service from the cloud management platform includes: receiving a publishing request of the composition service from the cloud management platform, where the publishing request includes the management policy of the composition service. In this implementation, the management policy of the composition service is defined by the cloud service provider.

Optionally, the management policy of the composition service may alternatively be defined by the tenant. In this way, a method for obtaining the management policy of the composition service may be: obtaining the management policy of the composition service in response to an input operation of the tenant, where the input operation of the tenant is an operation of inputting the management policy of the composition service by the tenant. In this implementation, the user may flexibly define the management policy of the composition service as required.

In a possible implementation, the association relationship between the at least two associated cloud services includes at least a parent-child relationship and/or a sibling relationship. The parent-child relationship indicates that a cloud service depends on another cloud service. The sibling relationship indicates that cloud services are in an equal position, are independent of each other, and do not have a dependency relationship.

In a possible implementation, the lifecycle policy of the at least two associated cloud services indicates a relationship between lifecycles of the at least two associated cloud services and a lifecycle of the composition service, where a lifecycle of a cloud service includes a start time and an expiration time of the cloud service.

In a possible implementation, the association relationship between the at least two associated cloud services is a parent-child relationship, and the relationship between the lifecycles of the at least two associated cloud services and the lifecycle of the composition service includes: A lifecycle of a parent service in the at least two associated cloud services is consistent with the lifecycle of the composition service, and a lifecycle of a child service in the at least two associated cloud services is consistent with or inconsistent with the lifecycle of the composition service.

That the lifecycle of the parent service is consistent with the lifecycle of the composition service means that a start time of the parent service is consistent with (that is, the same as) a start time of the composition service, and an expiration time of the parent service is consistent with an expiration time of the composition service.

That the lifecycle of the child service is consistent with the lifecycle of the composition service means that a start time of the child service is consistent with the start time of the composition service, and an expiration time of the child service is consistent with the expiration time of the composition service.

That the lifecycle of the child service is inconsistent with the lifecycle of the composition service includes: A validity period of the child service is shorter than a validity period of the composition service, and the start time of the child service is later than the start time of the composition service and/or the expiration time of the child service is earlier than the expiration time of the composition service.

In a possible implementation, the association relationship between the at least two associated cloud services is a sibling relationship, and the relationship between the lifecycles of the at least two associated cloud services and the lifecycle of the composition service includes: a union set of the lifecycles of the at least two associated cloud services is consistent with the lifecycle of the composition service.

An example in which a composition service includes two sibling services is used for description.

Optionally, a start time of a sibling service 1 in the composition service is consistent with a start time of the composition service, and an expiration time of the sibling service 1 is consistent with an expiration time of the composition service. In addition, a start time of a sibling service 2 in the composition service is consistent with the start time of the composition service, and an expiration time of the sibling service 2 is consistent with the expiration time of the composition service. That is, within a validity period of the composition service, the composition service provides both sibling services.

Optionally, a start time of a sibling service in the composition service is consistent with the start time of the composition service, and an expiration time of the sibling service is consistent with the expiration time of the composition service. In addition, a start time of another sibling service in the composition service is later than the start time of the composition service, and/or an expiration time of the another sibling service is earlier than the expiration time of the composition service. That is, within a validity period of the composition service, the composition service can always provide one of the sibling services, and provide another sibling service in a part of the validity period of the composition service.

Optionally, a validity period of each sibling service in the composition service is shorter than that of the composition service. For any sibling service, a start time of the sibling service is later than that of the composition service and/or an expiration time of the sibling service is earlier than that of the composition service, but within any time period within a validity period of the composition service, the composition service needs to provide at least one cloud service of the sibling service 1 and the sibling service 2.

In a possible implementation, the managing the composition service based on the management policy includes: processing, based on the lifecycle policy and the association relationship of the at least two associated cloud services, a business request initiated by the tenant for the composition service, where the business request of the composition service includes any one of the following: a business renewal request, a business unsubscription request, a business freezing request, a business unfreezing request, or a business deletion request.

In a possible implementation, the association relationship between the at least two associated cloud services is a parent-child relationship; the lifecycle policy of the at least two associated cloud services is that the lifecycle of the parent service is consistent with the lifecycle of the composition service, and the lifecycle of the child service is also consistent with the lifecycle of the composition service; and the business request is a renewal business for the child service; and the processing, based on the association relationship and the lifecycle policy of the at least two associated cloud services, the business request initiated by the tenant for the composition service includes: generating a processing result of the business request based on the association relationship and the lifecycle policy of the at least two associated cloud services, where the processing result includes first prompt information; and displaying the first prompt information, where the first prompt information is used to prompt the tenant to renew the parent service corresponding to the child service, and renewal duration of the child service is consistent with renewal duration of the parent service. Renewing the parent service based on the first prompt information can ensure normal use of the composition service. Otherwise, if only the child service is renewed, and the parent service is not renewed, the child service cannot be run after the parent service expires.

In a possible implementation, the association relationship between the at least two associated cloud services of the composition service is a parent-child relationship; the lifecycle policy of the at least two associated cloud services is that the lifecycle of the parent service is consistent with the lifecycle of the composition service, and the lifecycle of the child service is also consistent with the lifecycle of the composition service; and the business request is a business request for unsubscribing from the parent service; and the processing, based on the association relationship and the lifecycle policy of the at least two associated cloud services, the business request initiated by the tenant for the composition service includes: generating a processing result of the business request based on the association relationship and the lifecycle policy of the at least two associated cloud services, where the processing result includes second prompt information; and displaying the second prompt information, where the second prompt information is used to prompt the tenant to unsubscribe from the child service before the tenant unsubscribes from the parent service. Based on the second prompt information, before the parent service is unsubscribed from, the child service is unsubscribed from first, so that resources can be saved. Otherwise, if only the parent service is unsubscribed from, and the child service is not unsubscribed from, the child service cannot be run after the parent service is unsubscribed from, causing a waste of resources.

In a possible implementation, the management policy of the composition service further includes a provisioning policy of the at least two associated cloud services, and the provisioning policy includes that the at least two associated cloud services are provisioned in a preset sequence or the at least two associated cloud services are independently provisioned.

In a possible implementation, when the association relationship between the at least two associated cloud services is a parent-child relationship, the provisioning policy of the at least two associated cloud services is that the at least two associated cloud services are provisioned in the preset sequence, and provisioning in the preset sequence includes: provisioning the parent service first, and then provisioning the child service.

In a possible implementation, when the association relationship between the at least two associated cloud services is a sibling relationship, the provisioning policy of the at least two associated cloud services is independent provisioning.

According to a second aspect, an embodiment of this application provides a communication apparatus, including a processing module, an obtaining module, and a management module. The processing module is configured to publish a composition service from a cloud management platform, where the composition service includes at least two associated cloud services; the obtaining module is configured to obtain a management policy of the composition service from the cloud management platform, where the management policy of the composition service includes an association relationship between the at least two associated cloud services and/or a lifecycle policy of the at least two associated cloud services; and the management module is configured to: provide the composition service for a tenant, and manage the composition service based on the management policy of the composition service when the tenant performs an operation on the composition service.

In a possible implementation, the service management apparatus further includes a receiving module, to receive a publishing request of the composition service from the cloud management platform, where the publishing request includes the management policy of the composition service.

In a possible implementation, the obtaining module is specifically configured to obtain the management policy of the composition service in response to an input operation of the tenant, where the input operation is an operation of inputting the management policy of the composition service by the tenant.

In a possible implementation, the management module is specifically configured to process, based on the association relationship and the lifecycle policy of the at least two associated cloud services, a business request initiated by the tenant for the composition service, where the business request includes any one of the following: a business renewal request, a business unsubscription request, a business freezing request, a business unfreezing request, or a business deletion request.

In a possible implementation, the association relationship between the at least two associated cloud services is a parent-child relationship; the lifecycle policy of the at least two associated cloud services is that a lifecycle of a parent service is consistent with a lifecycle of the composition service, and a lifecycle of a child service is also consistent with the lifecycle of the composition service; the business request is a renewal business for the child service; and the communication apparatus further includes a display module; the management module is specifically configured to generate a processing result of the business request based on the association relationship and the lifecycle policy of the at least two associated cloud services, where the processing result includes first prompt information; and the display module is configured to display the first prompt information, where the first prompt information is used to prompt the tenant to renew the parent service corresponding to the child service, and renewal duration of the child service is consistent with renewal duration of the parent service.

In a possible implementation, the association relationship between the at least two associated cloud services is a parent-child relationship; the lifecycle policy of the at least two associated cloud services is that a lifecycle of a parent service is consistent with a lifecycle of the composition service, and a lifecycle of a child service is also consistent with the lifecycle of the composition service; the business request is a business request for unsubscribing from the parent service; and the communication apparatus further includes a display module; the management module is specifically configured to generate a processing result of the business request based on the association relationship and the lifecycle policy of the at least two associated cloud services, where the processing result includes second prompt information; and the display module is configured to display the second prompt information, where the second prompt information is used to prompt the tenant to unsubscribe from the child service before the tenant unsubscribes from the parent service.

In a possible implementation of the first aspect and the second aspect, the management policy of the composition service further includes a provisioning policy of the at least two associated cloud services, and the provisioning policy includes that the at least two associated cloud services are provisioned in a preset sequence or the at least two associated cloud services are independently provisioned.

In a possible implementation of the first aspect and the second aspect, when the association relationship between the at least two associated cloud services is a parent-child relationship, the provisioning policy of the at least two associated cloud services is that the at least two associated cloud services are provisioned in the preset sequence, and provisioning in the preset sequence includes: provisioning the parent service first, and then provisioning the child service.

In a possible implementation, when the association relationship between the at least two associated cloud services is a sibling relationship, the provisioning policy of the at least two associated cloud services is independent provisioning.

According to a third aspect, an embodiment of this application provides a computing device cluster, including at least one computing device, where each computing device includes a processor and a memory; and the processor of the at least one computing device is configured to execute instructions stored in the memory of the at least one computing device, so that the computing device cluster performs the method according to any one of the first aspect and the possible implementations of the first aspect.

According to a fourth aspect, an embodiment of this application provides a computer program product including instructions. When the instructions are run by a computing device cluster, the computing device cluster is enabled to perform the method according to any one of the first aspect and the possible implementations of the first aspect.

According to a fifth aspect, an embodiment of this application provides a computer-readable storage medium, including computer program instructions. When the computer program instructions are executed by a computing device cluster, the computing device cluster performs the method according to any one of the first aspect and the possible implementations of the first aspect.

According to a sixth aspect, an embodiment of this application provides a chip, including a memory and a processor. The memory is configured to store computer instructions. The processor is configured to: invoke the computer instructions from the memory and run the computer instructions, to perform the method according to any one of the first aspect and the possible implementations of the first aspect.

It should be understood that, for beneficial effects achieved by the technical solutions in the second aspect to the sixth aspect and the corresponding possible implementations in embodiments of this application, refer to the foregoing technical effects in the first aspect and the corresponding possible implementations. Details are not described herein again.

### BRIEF DESCRIPTION OF DRAWINGS

FIG. 1 is a diagram 1 of an architecture of a service management system according to an embodiment of this application;
FIG. 2 is a diagram 2 of an architecture of a service management system according to an embodiment of this application;
FIG. 3 is a diagram of a hardware structure of a computing device according to an embodiment of this application;
FIG. 4 is a schematic flowchart of a service management method according to an embodiment of this application;
FIG. 5 is a diagram 1 of an operation interface in a service management method according to an embodiment of this application;
FIG. 6 is a diagram 1 of a lifecycle relationship between services according to an embodiment of this application;
FIG. 7 is a diagram 2 of a lifecycle relationship between services according to an embodiment of this application;
FIG. 8 is a diagram 2 of an operation interface in a service management method according to an embodiment of this application;
FIG. 9 is a diagram 3 of an operation interface in a service management method according to an embodiment of this application;
FIG. 10 is a diagram 4 of an operation interface in a service management method according to an embodiment of this application;
FIG. 11 is a diagram 5 of an operation interface in a service management method according to an embodiment of this application;
FIG. 12 is a diagram 6 of an operation interface in a service management method according to an embodiment of this application;
FIG. 13 is a diagram 7 of an operation interface in a service management method according to an embodiment of this application;
FIG. 14 is a diagram of a structure of a communication apparatus according to an embodiment of this application; and
FIG. 15 is a diagram of an architecture of a computing device cluster according to an embodiment of this application.

### DESCRIPTION OF EMBODIMENTS

The term "and/or" in this specification describes only an association relationship for describing associated objects and indicates that three relationships may exist. For example, A and/or B may indicate the following three cases: Only A exists, both A and B exist, and only B exists.

In the specification and claims in embodiments of this application, the terms "first", "second", and so on are intended to distinguish between different objects but do not indicate a particular sequence of the objects.

In addition, in embodiments of this application, the word "example" or "for example" indicates giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise stated, "a plurality of" means two or more than two, and "a plurality of" may be described as at least two.

The service management method provided in embodiments of this application relates to the field of cloud computing. The following explains and describes some concepts in the field of cloud computing.

### 1. Cloud computing

The cloud computing is a service and technology used to provide IT resources for tenants based on requirements of the tenants through the internet. The IT resources include but are not limited to servers, storage, networks, and applications. The cloud computing mainly features network-centralization, service-orientation, resource pooling, transparency, high scalability, and high availability.

### 2. Cloud management platform

The cloud management platform is a platform for a cloud service provider to provide IT resources, namely, a platform for providing a cloud service. The cloud service provider provides a cloud service on the cloud management platform and publishes the cloud service to a cloud marketplace. Then, a tenant (an enterprise tenant or an individual tenant) obtains the cloud service from the cloud marketplace through leasing.

### 3. Cloud marketplace

The cloud marketplace in embodiments of this application is a platform that provides IT resource transaction and IT resource management for a buyer and a seller of IT resources. It may be understood that a computing device cluster or a computing device implements a function of the cloud marketplace by running an application of the cloud marketplace, and the cloud marketplace in the following embodiments may be understood as a computing device or a computing device cluster that performs the function of the cloud marketplace. The cloud marketplace provides complete pre-sales, transaction, and after-sales assurance. In embodiments of this application, the cloud marketplace may also be referred to as a cloud store. The cloud marketplace and the cloud store in the following embodiments are a same concept. The seller of the IT resources is a producer of the IT resources (for example, the cloud service provider), the buyer of the IT resources is an enterprise tenant or an individual tenant, and the cloud service provider and the tenant log in to the cloud store to buy and sell cloud services.

It may be understood that the cloud service provider may publish an offering (the offering in embodiments of this application may be a cloud service or a resource in the cloud computing field) of the cloud service provider to the cloud marketplace on the cloud management platform, so that the tenant can purchase the offering in the cloud marketplace, and subsequently, can further manage the offering, for example, unsubscribe from, renew, or freeze the offering.

It is generally considered in the industry that cloud computing resources include three levels: infrastructure as a service IaaS, platform as a service PaaS, and software as a service SaaS.

### (1) Infrastructure as a service (infrastructure as a service, IaaS)

The cloud service provider builds basic IT environments, such as a CPU, storage, a network, and another computing resource. Specifically, the cloud service provider has a right to manage a server resource, a virtualization resource, a storage resource, and a network resource, and the tenant has a right to use these resources, but does not have a right to manage these resources. For example, the tenant may use a hardware server or a virtual machine for payment, and the tenant may deploy and run any operating system and application.

The IaaS mode is flexible for the tenant to use, but a maintenance workload of the tenant is heavy and costs are high.

### (2) Platform as a service (platform as a service, PaaS)

The cloud service provider establishes an environment needed by the tenant for running an application, and provides the environment for the tenant in a form of platform. The cloud service provider provides resources including but not limited to storage, a network, an operating system, a database, middleware, and a runtime library. The tenant is responsible for developing an application of the tenant based on the platform.

### (3) Software as a service (software as a service, SaaS)

The software as a service is customer-oriented centralized software hosting and management. The tenant only uses application software and is not responsible for any maintenance or management of the software. The cloud service provider is responsible for pre-configuration, management, and maintenance of the application software.

The following uses an example to briefly describe differences between permission of the cloud service provider and permission of the tenant in the three levels of services. For example, it is assumed that the IT resources include a network, storage, a server, virtualization, an operating system, middleware, runtime, data, and an application.

For the IaaS, the cloud service provider has management permission on the network, the storage, the server, and the virtualization in the IT resources, and the tenant has management permission on the operating system, the middleware, the runtime, the data, and the application.

For the PaaS, the cloud service provider has management permission on the network, the storage, the server, the virtualization, the operating system, the middleware, and the runtime, and the tenant has management permission on the data and the application.

For the SaaS, the cloud service provider has management permission on the network, the storage, the server, the virtualization, the operating system, the middleware, the runtime, the data, and the application, and the tenant has only a right of use and no management right on all the resources.

With reference to the foregoing content, a cloud service is used as an example, and a process of publishing the cloud service (namely, an offering) to the cloud marketplace is as follows:
1. the cloud service provider first applies for registration as a service provider of the cloud marketplace;
2. deploy the cloud service on the cloud;
3. develop and commission an interface for the cloud marketplace to invoke;
4. debug the interface; and
5. release the offering to the cloud marketplace.

For the publishing process of the service, refer to existing information. Details are not described in embodiments of this application again.

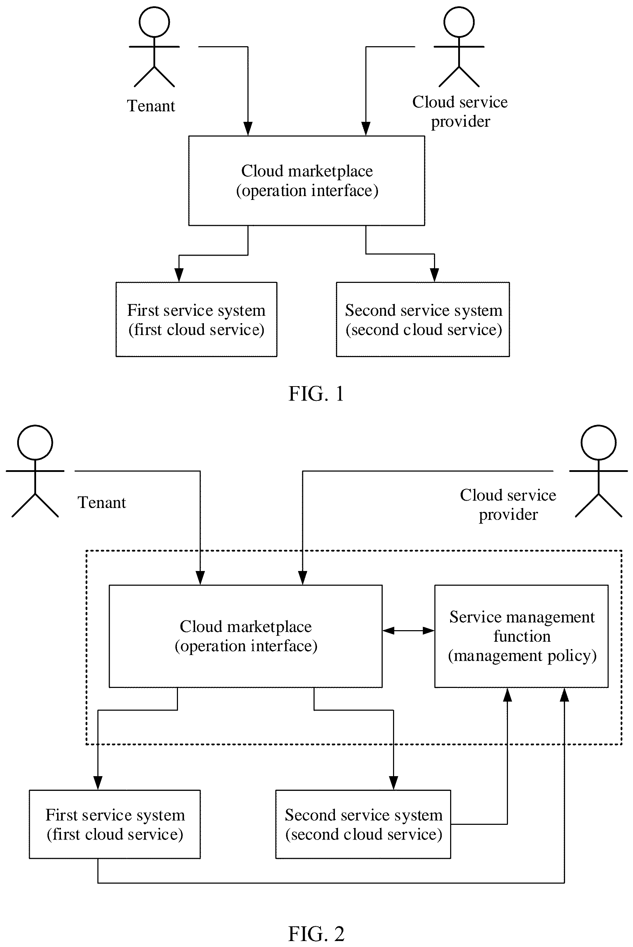

Refer to a diagram of an architecture of a service management system shown in FIG. 1. A device for the cloud service provider to interact with the cloud marketplace may be referred to as a cloud management platform, and a device for the tenant to interact with the cloud marketplace may be referred to as a tenant device. As shown in FIG. 1, the cloud service provider publishes a first cloud service in a first service system and a second cloud service in a second service system to the cloud marketplace on the cloud management platform. Then, in the cloud marketplace through the tenant device, the tenant subscribes to and provisions the first cloud service in the first service system, and/or subscribes to and provisions the second cloud service in the second service system. If the tenant subscribes to the first cloud service and the second cloud service, the tenant may independently use the first cloud service and the second cloud service, and the cloud marketplace separately manages the first cloud service and the second cloud service, for example, performs lifecycle management.

It should be noted that interaction between the tenant and the cloud marketplace is implemented by the tenant by performing an operation on an operation interface provided by the cloud marketplace and displayed on the tenant device (for example, the tenant logs in to the cloud marketplace through the tenant device, and the tenant device may display a related interface provided by the cloud marketplace). The operation interface is an interface provided by the cloud marketplace or the cloud store for the tenant. For example, after successfully registering with the cloud marketplace, the tenant becomes a user of the cloud marketplace, and may subsequently perform an operation on the interface provided by the cloud marketplace, to perform an operation like subscribing to, renewing, or unsubscribing from a service. Interaction between the cloud management platform and the cloud marketplace is implemented by a staff member of the cloud service provider by performing an operation on an operation interface provided by the cloud marketplace and displayed on the cloud management platform (for example, logging in to the cloud marketplace, where a related interface provided by the cloud marketplace may be displayed on the cloud management platform). The operation interface is provided by the cloud marketplace to the cloud management platform. For example, after successfully registering with the cloud marketplace, the cloud service provider becomes a service provider of the cloud marketplace. Subsequently, the service provider may perform, on the cloud management platform, an operation on the interface provided by the cloud marketplace, to perform an operation like cloud service publishing or cloud service unpublishing.

In a scenario in which the tenant uses a plurality of services, a service management problem becomes increasingly outstanding. Currently, an implementation is as follows: A cloud service scenario is used as an example. After purchasing a plurality of cloud services in the cloud marketplace, the tenant integrates the plurality of services into one cloud service via an integration service (a service used to integrate the plurality of services into one composition service). In this way, the integrated service is managed as one cloud service.

In the foregoing implementation, the tenant separately purchases the plurality of cloud services and then performs service integration, and lifecycles of different cloud services in the plurality of cloud services may be different. As a result, expiration times of the cloud services may be different. Some cloud services expire, and some cloud services do not expire. This causes a waste of resources. In addition, only when the tenant needs to use the plurality of services, it takes time and costs to customize a service used to integrate cloud services (namely, an integration service). As cloud services increase, for different cloud service compositions, different corresponding integration services are needed. This poses a great challenge for cloud service management.

To resolve the problem in the background, an embodiment of this application provides a service management method. The cloud marketplace publishes a composition service from a cloud management platform, where the composition service includes at least two associated cloud services; obtains a management policy of the composition service from the cloud management platform, where the management policy of the composition service includes an association relationship between the at least two associated cloud services and/or a lifecycle policy of the at least two associated cloud services; and provides the composition service for the tenant, and manages the composition service based on the management policy of the composition service when the tenant performs an operation on the composition service. In the method, complex service integration does not need to be performed on the plurality of cloud services. Instead, the management policy of the composition service including the plurality of cloud services is obtained, and the composition service is managed based on the management policy. Actually, the plurality of cloud services are still independent cloud services, and the plurality of cloud services are equivalent to the composition service based on the management policy, so that cloud services can be managed more conveniently.

It should be noted that, in this embodiment of this application, the composition service includes the plurality of cloud services, and the tenant can implement effect of using the plurality of cloud services by using the composition service. The plurality of cloud services in the composition service may be a composition of services at the foregoing different levels, for example, a composition of two or three of the IaaS, the PaaS, and the SaaS. Alternatively, the composition service may be a composition of a plurality of services at the same level, for example, a composition of a plurality of services in the IaaS, a composition of a plurality of services in the PaaS, or a composition of a plurality of services in the SaaS.

The following are some examples of the composition service.

For example, the composition service is a composition of a server, an operating system, and software. It can be learned that the composition service is a composition of a service in the IaaS, a service in the PaaS, and a service in the SaaS.

For example, the composition service is a composition of an operating system and software. It can be learned that the composition service is a composition of a service in the PaaS and a service in the SaaS.

For example, the composition service is a composition of a virtual machine and a system disk. It can be learned that the composition service is a composition of a service in the IaaS and a service in the PaaS.

For example, the composition service is a composition of software and an extended package of the software. It can be learned that the composition service is a composition of two services in the SaaS.

The service management method provided in embodiments of this application may be applied to the service management system shown in FIG. 2. As shown in FIG. 2, a service management function is introduced into the service management system, and the service management function is used to manage a management policy of a composition service (the management policy of the composition service is described in detail in the following embodiments).

With reference to FIG. 2, in an implementation, after separately publishing a first cloud service in a first service system and a second cloud service in a second service system to a cloud marketplace on a cloud management platform, a cloud service provider may logically composite the first cloud service and the second cloud service on an operation interface provided by the cloud marketplace, and publish a composition service to the cloud marketplace. A process of publishing the composition service is as follows: The cloud service provider submits a publishing request of the composition service to the cloud marketplace on the cloud management platform, where the publishing request includes information about the first cloud service and the second cloud service that are included in the composition service, and a management policy of the composition service. After the cloud marketplace receives the publishing request, the composition service is released in the cloud marketplace, and the management policy of the composition service is written into the service management function. Subsequently, the cloud marketplace may obtain the management policy of the composition service from the service management function, to manage the composition service.

With reference to FIG. 2, in another implementation, after a tenant purchases a first cloud service and a second cloud service, the tenant may logically composite the first cloud service and the second cloud service on an operation interface provided by a cloud marketplace, to obtain a composition service. Specifically, the tenant obtains or defines a management policy of the composition service obtained by compositing the first cloud service and the second cloud service, and writes the management policy into the service management function. Subsequently, the tenant may view the management policy of the composition service, and the cloud marketplace also has permission to obtain the management policy of the composition service from the service management function, to manage the composition service.

Optionally, in the foregoing implementation in which the tenant composites the first cloud service and the second cloud service, the first cloud service may not be a cloud service to which the tenant subscribes in the cloud marketplace and/or the second cloud service may not be a cloud service to which the tenant subscribes in the cloud market, and the first cloud service may be a cloud service obtained by the tenant in another manner and/or the second cloud service may be a cloud service obtained by the tenant in another manner, for example, cloud services purchased offline. In this case, the cloud services purchased offline supports compositing through the cloud marketplace, and the cloud marketplace supports compositing of cloud services that are not in the cloud marketplace.

Optionally, the service management function in FIG. 2 may be co-disposed with a background server of the cloud marketplace, or may be independently disposed. This is not limited in embodiments of this application. In the following embodiments, an example in which the service management function is integrated into the background server of the cloud marketplace is used to describe a service management method and an apparatus provided in embodiments of this application.

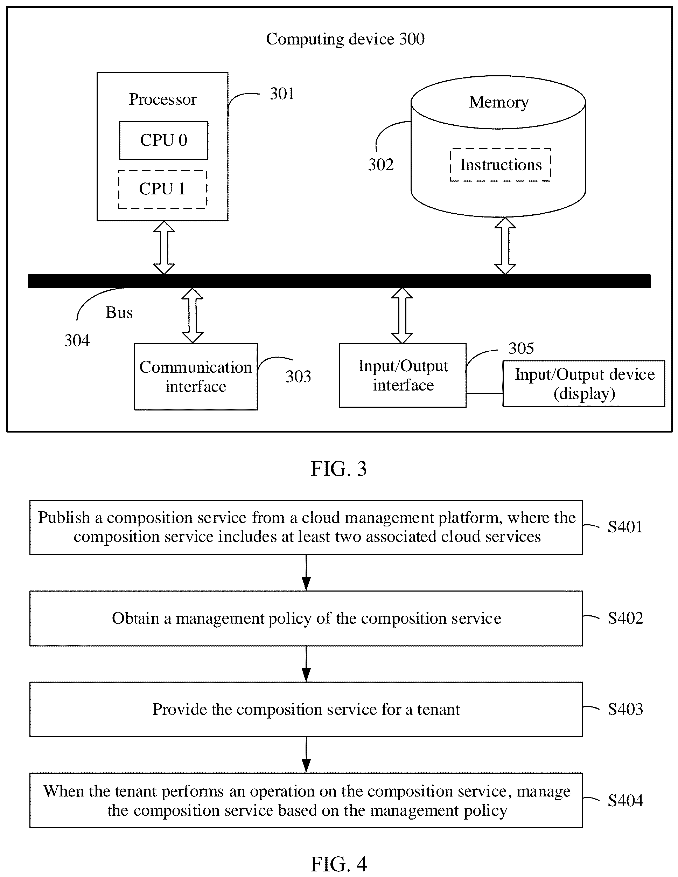

The service management method provided in embodiments of this application may be performed by a computing device cluster on which a cloud marketplace function is run. The computing device cluster includes at least one computing device. The cloud marketplace provides, on a display of the computing device, a user with an interface for a user operation, for example, an interface for a staff member of the cloud service provider to perform an operation or an interface for the tenant to perform an operation. One computing device is used as an example. FIG. 3 is a diagram of a hardware structure of a computing device 300 for running an application in a cloud marketplace according to an embodiment of this application. Various components shown in FIG. 3 may be implemented in hardware including one or more signal processing and/or application-specific integrated circuits, software, or a composition of hardware and software.

As shown in FIG. 3, the computing device 300 may include a processor 301, a memory 302, and a communication interface 303. The processor 301, the memory 302, and the communication interface 303 may be connected to each other through a bus 304, or may be connected to each other in another manner.

The processor 301 is a control center of the computing device 300. The processor 301 may be a general-purpose central processing unit (central processing unit, CPU), another general-purpose processor, or the like. The general-purpose processor may be a microprocessor, any conventional processor, or the like.

A controller in the processor 301 is a nerve center and a command center of the computing device 300. The controller may generate an operation control signal based on instruction operation code and a time sequence signal, to complete control of instruction reading and instruction execution. Optionally, a memory may be further disposed in the processor 301, and is configured to store instructions and data. For example, the processor 301 may include one or more CPUs, for example, a CPU 0 and a CPU 1 shown in FIG. 3.

The memory 302 includes but is not limited to a random access memory (random access memory, RAM), a read-only memory (read-only memory, ROM), an erasable programmable read-only memory (erasable programmable read-only memory, EPROM), a flash memory, an optical memory, a magnetic disk storage medium, another magnetic storage device, or any other medium that can carry or store expected program code in an instruction form or in a data structure form and that can be accessed by a computer. In this embodiment of this application, the memory 302 may store information such as computer instructions.

In a possible implementation, the memory 302 may be independent of the processor 301. The memory 302 may be connected to the processor 301 through the bus 304, and is configured to store data, instructions, or program code. When invoking and executing the instructions or program code stored in the memory 302, the processor 301 can implement related steps in the service management method provided in embodiments of this application.

In another possible implementation, the memory 302 may alternatively be integrated with the processor 301.

The communication interface 303 may be a transceiver module, and is configured to communicate with another device or a communication network, for example, an ethernet, a RAN, or a wireless local area network (wireless local area network, WLAN). The communication interface 303 may receive instructions, a message, data, or the like. The transceiver module may be an apparatus, for example, a transceiver or a transceiver machine. Optionally, the communication interface 303 may alternatively be a transceiver circuit located in the processor 301, and is configured to implement signal input and signal output of the processor. The communication interface 303 may be a wired interface (port), for example, a fiber distributed data interface (fiber distributed data interface, FDDI) or a gigabit ethernet (gigabit ethernet, GE) interface, or the communication interface 303 may be a wireless interface.

The bus 304 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. The bus may alternatively be classified into a serial bus or a parallel bus. For ease of indication, the bus is indicated by only one bold line in FIG. 3. However, it does not indicate that there is only one bus or only one type of bus.

Optionally, the computing device 300 in this embodiment of this application may further include an input/output interface 305. The input/output interface 305 is configured to: connect to an input device, and receive information entered by a user via the input device. The input device includes but is not limited to a keyboard, a touchscreen, a microphone, and the like. The input/output interface 305 is further configured to: connect to an output device and output a processing result of the processor 301. The output device includes but is not limited to a display and a printer.

It should be understood that the computing device 300 shown in FIG. 3 is merely an example of the computing device, and the computing device may have more or fewer components than those shown in FIG. 3, or a composition of two or more components, or different component configurations.

With reference to the content in the foregoing embodiments, the following describes in detail the service management method provided in embodiments of this application. The service management method is performed by a cloud marketplace. It may be understood that all actions performed by the cloud marketplace are actually performed by a computing device or a computing device cluster on which the cloud marketplace is run. As shown in FIG. 4, the service management method provided in embodiments of this application includes the following steps.

S401: Publish a composition service from a cloud management platform, where the composition service includes at least two associated cloud services.

It should be noted that the composition service in this embodiment of this application is a cloud service of a virtual concept (or a logical concept). Resources or instances of the at least two associated cloud services included in the composition service are deployed on the cloud, but when the composition service is used as an independent cloud service, a corresponding resource or instance is not deployed on the cloud.

In this embodiment of this application, the cloud marketplace receives a publishing request of the composition service from the cloud management platform, where the publishing request includes information indicating the at least two associated cloud services in the composition service, and the cloud marketplace publishes the composition service in the cloud marketplace in response to the publishing request of the composition service.

In an implementation, after the cloud service provider registers with the cloud marketplace as a service provider of the cloud marketplace, the cloud marketplace may provide, for the cloud service provider, an operation interface used for offering publishing (or referred to as offering release), that is, an operation interface used for publishing a cloud service may be displayed on the cloud management platform, and a staff member of the cloud service provider enters related information of the composition service on the operation interface and performs submission (that is, sends the publishing request of the composition service to the cloud marketplace on the cloud management platform). The cloud marketplace publishes the composition service in the cloud marketplace in response to the input operation. On the operation interface for offering release, the information entered by the staff member of the cloud service provider includes the information about the at least two associated cloud services included in the composition service (for example, respective names of the at least two associated cloud services), and information such as description information (such as an offering name, an offering introduction, and offering descriptions), a customer service hotline, an email address, or a user guide of the composition service.

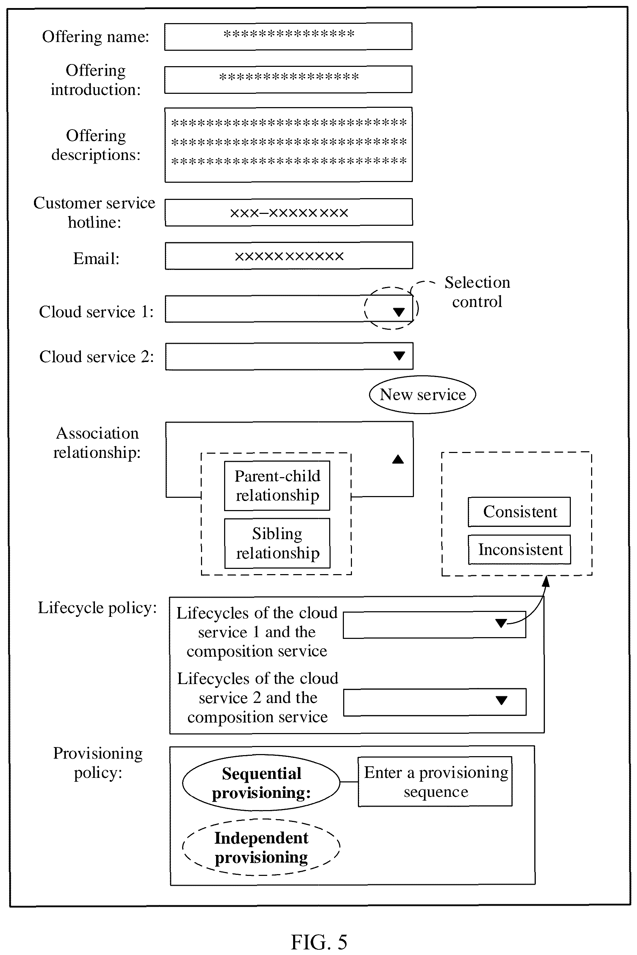

For example, FIG. 5 is a diagram of an operation interface on which the cloud service provider publishes the composition service (the composition service is published to the cloud marketplace as an offering). When publishing a composition service, the staff member of the cloud service provider enters information such as an offering name, an offering introduction, offering descriptions, a customer service hotline, and an email address of the composition service on the interface shown in FIG. 5, and the staff member further needs to select information about each cloud service in the composition service on the interface, for example, needs to enter a name of each cloud service in the composition service.

Optionally, the staff member may select at least two cloud services in the composition service through a selection control. For example, as shown in FIG. 5, after the selection control is tapped, a cloud service 1 and a cloud service 2 may be selected.

S402: Obtain a management policy of the composition service.

It should be understood that the management policy of the composition service is used to manage the composition service, and management on the composition service may include subscription, renewal, unsubscription, freezing, unfreezing, deletion, and the like.

In this embodiment of this application, the management policy of the composition service may include an association relationship between the at least two associated cloud services in the composition service and a lifecycle policy of the at least two associated cloud services. The association relationship indicates a relationship between at least two cloud services included in the composition service, and the lifecycle policy indicates a relationship between lifecycles of the at least two cloud services included in the composition service and a lifecycle of the composition service.

The following separately describes in detail the association relationship between the at least two cloud services included in the composition service and content of the lifecycle policy of the at least two cloud services.

### 1. Association relationship

In this embodiment of this application, the association relationship between the cloud services is defined based on whether a dependency relationship exists between a plurality of cloud services. Optionally, the association relationship between the at least two associated cloud services in the composition service may include at least a parent-child relationship and/or a sibling relationship. The parent-child relationship indicates that a cloud service (referred to as a child service) depends on another cloud service (referred to as a parent service), that is, the child service depends on the parent service. The sibling relationship indicates that cloud services are in an equal position, are independent of each other, and do not have a dependency relationship.

For example, two cloud services are composited into one composition service. For example, a first cloud service and a second cloud service are composited into one composition service. When the first cloud service and the second cloud service depend on each other, a relationship between the first cloud service and the second cloud service is a parent-child relationship. When the second cloud service depends on the first cloud service, the first cloud service is a parent service, and the second cloud service is a child service. When the first cloud service and the second cloud service are independent of each other, a relationship between the first cloud service and the second cloud service is a sibling relationship.

For example, the first cloud service is a software package of an application, the second cloud service is an extended package of the software package, and the extended package of the software package depends on the software package. Therefore, an association relationship between the software package and the extended package is a parent-child relationship. For another example, the first cloud service is an operating system, the second cloud service is a system disk, and the operating system and the system disk are independent of each other and have no dependency relationship. Therefore, an association relationship between the operating system and the system disk is a sibling relationship.

For example, three cloud services are used as an example, for example, a first cloud service, a second cloud service, and a third cloud service. A relationship between the three cloud services may include one or more of a parent-child relationship and a sibling relationship. For example, the following several cases may be included.

Case 1: The first cloud service, the second cloud service, and the third cloud service are in a sibling relationship.

Case 2: One cloud service is a parent service, the other two cloud services are child services, and the child services are in a sibling relationship.

For example, the first cloud service is a parent service, and the second cloud service and the third cloud service are child services. To be specific, the first cloud service and the second cloud service are in a parent-child relationship, the first cloud service and the third cloud service are in a parent-child relationship, and the second cloud service and the third cloud service are in a sibling relationship.

Case 3: One cloud service is a sibling service, and a composition of the other two cloud services is equivalent to a sibling service. In the two composited cloud services, one cloud service may be a parent service, and the other cloud service is a child service.

For example, the first cloud service is a sibling service, a composition of the second cloud service and the third cloud service C is a sibling service, the second cloud service is a parent service, and the third cloud service is a child service.

Certainly, an association relationship between the plurality of cloud services may be another more complex relationship. This is not limited in embodiments of this application.

It may be understood that, in this embodiment of this application, the association relationship between the plurality of cloud services is configured, so that the plurality of cloud services are logically composited into one composition service.

### 2. Lifecycle policy

It may be understood that the lifecycle policy of the at least two cloud services indicates the relationship between the lifecycles of the at least two cloud services and the lifecycle of the composition service.

It should be understood that, in this embodiment of this application, the relationship between the lifecycles of the at least two cloud services in the composition service and the lifecycle of the composition service is defined based on the association relationship between the at least two cloud services in the composition service. A lifecycle of a service (including an independent cloud service or a composition service) includes a start time of the service and an expiration time of the service. A time period between the start time of the service and the expiration time of the service is a validity period of the service.

When the association relationship between the at least two cloud services is a parent-child relationship, the relationship between the lifecycles of the at least two cloud services in the composition service and the lifecycle of the composition service includes: A lifecycle of a parent service in the at least two cloud services is consistent with the lifecycle of the composition service, and a lifecycle of a child service in the at least two cloud services is consistent with the lifecycle of the composition service; or the lifecycle of the parent service is consistent with the lifecycle of the composition service, and the lifecycle of the child service is inconsistent with the lifecycle of the composition service.

It may be understood that, that the lifecycle of the parent service is consistent with the lifecycle of the composition service means that a start time of the parent service is consistent with (that is, the same as) a start time of the composition service, and an expiration time of the parent service is consistent with an expiration time of the composition service.

That the lifecycle of the child service is consistent with the lifecycle of the composition service means that a start time of the child service is consistent with the start time of the composition service, and an expiration time of the child service is consistent with the expiration time of the composition service.

That the lifecycle of the child service is inconsistent with the lifecycle of the composition service includes: A validity period of the child service is shorter than a validity period of the composition service, and the start time of the child service is later than the start time of the composition service and/or the expiration time of the child service is earlier than the expiration time of the composition service.

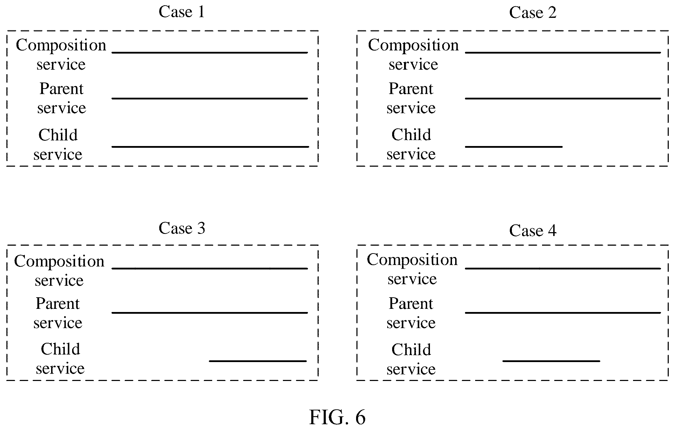

The following uses examples to describe a lifecycle relationship between the composition service and each of the parent service and the child service in the composition service. Two cloud services are used as an example. One cloud service is a parent service, and the other cloud service is a child service. As shown in FIG. 6, a relationship between lifecycles of the two cloud services and a lifecycle of a composition service may include the following four cases.

Case 1: A start time of the parent service is consistent with a start time of the composition service, and an expiration time of the parent service is consistent with an expiration time of the composition service. In addition, a start time of the child service is consistent with the start time of the composition service, and an expiration time of the child service is consistent with the expiration time of the composition service.

In other words, within a validity period of the composition service, the composition service provides both the parent service and the child service. It can be learned that, in this case, the start time of the parent service is consistent with the start time of the child service, and the expiration time of the parent service is also consistent with the expiration time of the child service.

Case 2: A start time of the parent service is consistent with a start time of the composition service, and an expiration time of the parent service is consistent with an expiration time of the composition service. In addition, a start time of the child service is consistent with the start time of the composition service, and an expiration time of the child service is earlier than the expiration time of the composition service.

Case 3: A start time of the parent service is consistent with a start time of the composition service, and an expiration time of the parent service is consistent with an expiration time of the composition service. In addition, a start time of the child service is later than the start time of the composition service, and an expiration time of the child service is consistent with the expiration time of the composition service.

Case 4: A start time of the parent service is consistent with a start time of the composition service, and an expiration time of the parent service is consistent with an expiration time of the composition service. In addition, a start time of the child service is later than the start time of the composition service, and an expiration time of the child service is earlier than the expiration time of the composition service.

In the relationships between the lifecycles described in Case 2 to Case 4, within the validity period of the composition service, the composition service may always provide the parent service, and provide the child service within a part of the validity period of the composition service. It can be learned that, in this case, a total validity period of the parent service is longer than a total validity period of the child service, that is, existence of the child service is premised on existence of the parent service.

When the association relationship between the at least two services is a sibling relationship, the relationship between the lifecycles of the at least two cloud services in the composition service and the lifecycle of the composition service includes: A union set of the lifecycles of the at least two cloud services is consistent with the lifecycle of the composition service.

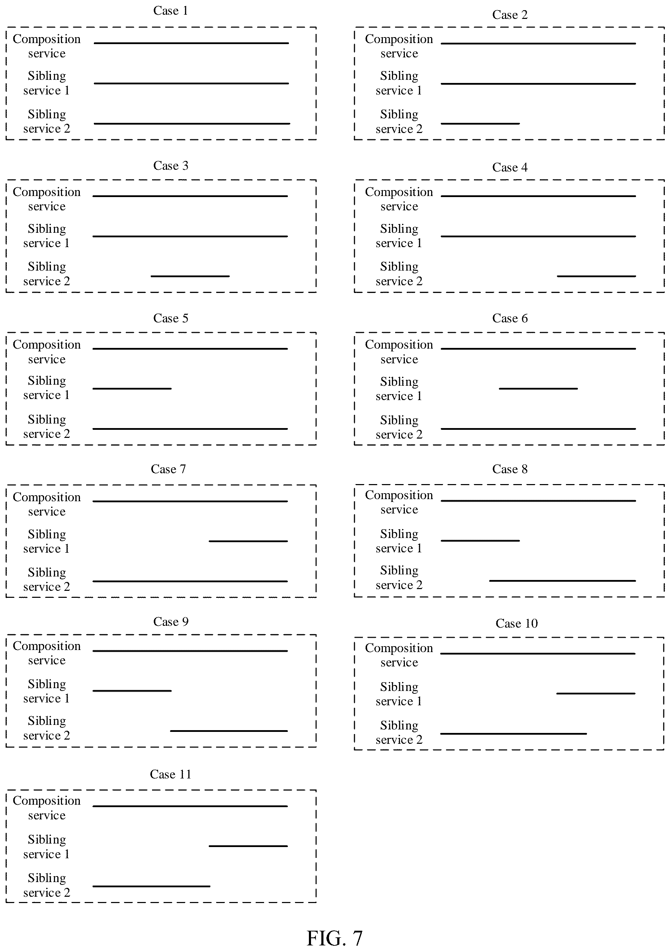

The following uses examples to describe a lifecycle relationship between the composition service and each of the cloud services in the composition service. Two cloud services are still used as an example. The two cloud services are both sibling services, and are respectively denoted as a sibling service 1 and a sibling service 2. As shown in FIG. 7, there may be the following 11 relationships between a lifecycle of a composition service and lifecycles of the two cloud services.

Case 1: A start time of the sibling service 1 is consistent with a start time of the composition service, and an expiration time of the sibling service 1 is consistent with an expiration time of the composition service. In addition, a start time of the sibling service 2 is consistent with the start time of the composition service, and an expiration time of the sibling service 2 is consistent with the expiration time of the composition service.

In other words, within a validity period of the composition service, the composition service provides both the sibling service 1 and the sibling service 2. It can be learned that, in this case, the start time of the sibling service 1 is consistent with the lifecycle of the sibling service 2, and the expiration time of the sibling service 1 is also consistent with the expiration time of the sibling service 2.

Case 2: A start time of the sibling service 1 is consistent with a start time of the composition service, and an expiration time of the sibling service 1 is consistent with an expiration time of the composition service. In addition, a start time of the sibling service 2 is consistent with the start time of the composition service, and an expiration time of the sibling service 2 is earlier than the expiration time of the composition service.

Case 3: A start time of the sibling service 1 is consistent with a start time of the composition service, and an expiration time of the sibling service 1 is consistent with an expiration time of the composition service. In addition, a start time of the sibling service 2 is later than the start time of the composition service, and an expiration time of the sibling service 2 is earlier than the expiration time of the composition service.

Case 4: A start time of the sibling service 1 is consistent with a start time of the composition service, and an expiration time of the sibling service 1 is consistent with an expiration time of the composition service. In addition, a start time of the sibling service 2 is later than the start time of the composition service, and an expiration time of the sibling service 2 is consistent with the expiration time of the composition service.

In the relationships between the lifecycles described in Case 2 to Case 4, within the validity period of the composition service, the composition service may always provide the sibling service 1, and provide the sibling service 2 within a part of the validity period of the composition service.

Case 5: A start time of the sibling service 1 is consistent with a start time of the composition service, and an expiration time of the sibling service 1 is earlier than an expiration time of the composition service. In addition, a start time of the sibling service 2 is consistent with the start time of the composition service, and an expiration time of the sibling service 2 is consistent with the expiration time of the composition service.

Case 6: A start time of the sibling service 1 is later than a start time of the composition service, and an expiration time of the sibling service 1 is earlier than an expiration time of the composition service. In addition, a start time of the sibling service 2 is consistent with the start time of the composition service, and an expiration time of the sibling service 2 is consistent with the expiration time of the composition service.

Case 7: A start time of the sibling service 1 is later than a start time of the composition service, and an expiration time of the sibling service 1 is consistent with an expiration time of the composition service. In addition, a start time of the sibling service 2 is consistent with the start time of the composition service, and an expiration time of the sibling service 2 is consistent with the expiration time of the composition service.

In the relationships between the lifecycles described in Case 5 to Case 7, within the validity period of the composition service, the composition service may always provide the sibling service 2, and provide the sibling service 1 within a part of the validity period of the composition service. It can be learned that, in this case, a total validity period of the sibling service 1 is longer than a total validity period of the sibling service 2.

Case 8: A start time of the sibling service 1 is consistent with a start time of the composition service, and an expiration time of the sibling service 1 is earlier than an expiration time of the composition service. In addition, a start time of the sibling service 2 is later than the start time of the composition service, an expiration time of the sibling service 2 is consistent with the expiration time of the composition service, and the expiration time of the sibling service 1 is later than the start time of the sibling service 2.

Case 9: A start time of the sibling service 1 is consistent with a start time of the composition service, and an expiration time of the sibling service 1 is earlier than an expiration time of the composition service. In addition, a start time of the sibling service 2 is later than the start time of the composition service, an expiration time of the sibling service 2 is consistent with the expiration time of the composition service, and the expiration time of the sibling service 1 is consistent with the start time of the sibling service 2.

Case 10: A start time of the sibling service 1 is later than a start time of the composition service, and an expiration time of the sibling service 1 is consistent with an expiration time of the composition service. In addition, a start time of the sibling service 2 is consistent with the start time of the composition service, an expiration time of the sibling service 2 is earlier than the expiration time of the composition service, and the start time of the sibling service 1 is earlier than the expiration time of the sibling service 2.

Case 11: A start time of the sibling service 1 is later than a start time of the composition service, and an expiration time of the sibling service 1 is consistent with an expiration time of the composition service. In addition, a start time of the sibling service 2 is consistent with the start time of the composition service, an expiration time of the sibling service 2 is earlier than the expiration time of the composition service, and the start time of the sibling service 1 is consistent with the expiration time of the sibling service 2.

In the relationships between the lifecycles described in Case 8 to Case 11, in any time period within the validity period of the composition service, the composition service provides at least one cloud service of the sibling service 1 and the sibling service 2.

Optionally, in this embodiment of this application, the management policy of the composition service further includes a provisioning policy for the at least two associated cloud services in the composition service, and the provisioning policy is used to provision each cloud service in the composition service in a process of subscribing to the composition service. The provisioning policy includes that the at least two associated cloud services are provisioned in a preset sequence or the at least two associated cloud services are independently provisioned. It may be understood that the provisioning policy of the at least two cloud services relates to the association relationship between the at least two cloud services.

In an implementation, when the association relationship between the at least two cloud services in the composition service is a parent-child relationship, the provisioning policy of the at least two cloud services is that the at least two cloud services are provisioned in a preset sequence. Because the child service depends on the parent service, provisioning in the preset sequence includes provisioning the parent service first and then provisioning the child service. In other words, the child service can be provisioned based on the parent service only after the parent service is provisioned.

In another implementation, when the association relationship between the at least two associated cloud services in the composition service is a sibling relationship, the provisioning policy of the at least two associated cloud services is independent provisioning. Because the at least two cloud services are in a sibling relationship, that is, the at least two cloud services are independent of each other and do not depend on each other, a provisioning sequence of a plurality of services is not limited, and the at least two cloud services are independently provisioned.

In an implementation of S402, the management policy of the composition service may be defined by the cloud service provider, that is, the publishing request sent by the cloud management platform further includes the management policy of the composition service. Therefore, the method for obtaining the management policy of the composition service by the cloud marketplace may include: The cloud marketplace obtains the management policy of the composition service from the cloud management platform. For example, the cloud marketplace obtains the management policy of the composition service from the publishing request that is of the composition service and that is received from the cloud management platform.

Still refer to a display interface shown in FIG. 5. The staff member of the cloud service provider may further enter the management policy of the composition service on the display interface. As shown in FIG. 5, the staff member may select an association relationship between the cloud service 1 and the cloud service 2 through an association relationship selection control, and select, through a lifecycle selection control, lifecycles of the cloud service 1 and the cloud service 2 to be respectively consistent with or inconsistent with a lifecycle of the composition service; and can also enter a provisioning policy of the cloud service 1 and the cloud service 2, for example, sequential provisioning or independent provisioning. If the provisioning policy is sequential provisioning, a tenant further needs to enter a provisioning sequence of the cloud service 1 and the cloud service 2.

In some implementations, after the staff member selects the association relationship between the cloud service 1 and the cloud service 2, the cloud marketplace may automatically generate the provisioning policy of the cloud service 1 and the cloud service 2 based on the association relationship between the cloud service 1 and the cloud service 2, and the staff member does not need to perform entering. For example, when the staff member selects the association relationship between the cloud service 1 and the cloud service 2 to be a parent-child relationship, the provisioning sequence is automatically displayed in an input bar of the provisioning policy in FIG. 5, and the provisioning sequence is that the cloud service 1 and the cloud service 2.

In this embodiment of this application, after obtaining the management policy of the composition service, the cloud marketplace stores the management policy of the composition service to a service management function, and the service management function manages the management policy of the composition service. Subsequently, the cloud marketplace may obtain the management policy of the composition service from the service management function.

In another implementation of S402, the management policy of the composition service may alternatively be defined by a tenant. For the at least two cloud services, the tenant composites the at least two cloud services into one composition service by defining the management policy. The method for obtaining the management policy of the composition service by the cloud marketplace may include: The cloud marketplace obtains the management policy of the composition service in response to an input operation of the tenant, where the input operation is an operation of inputting the management policy of the composition service by the tenant.

In this embodiment of this application, the cloud marketplace may provide, for the tenant, an operation interface used by the tenant to perform service composition, so that the tenant enters, on the interface, the management policy of the composition service including the at least two associated cloud services, and the cloud marketplace obtains the management policy of the composition service in response to the input operation of the tenant. Optionally, the operation interface used by the tenant to enter the management policy of the composition service is similar to the interface shown in FIG. 5. Details are not described herein again.

S403: Provide the composition service for the tenant.

In this embodiment of this application, after the cloud service provider publishes the composition service in the cloud marketplace on the cloud management platform, offering information of the composition service as an offering may be displayed on an offering browsing interface of the cloud marketplace, and the tenant may subscribe to the composition service in the cloud marketplace as required, and use the composition service. Subsequently, the cloud marketplace may further manage the composition service based on the management policy of the composition service.

S404: When the tenant performs an operation on the composition service, manage the composition service based on the management policy.

In one case, after the tenant purchases the composition service in the cloud marketplace, the composition service needs to be provisioned to provide a corresponding cloud service for the tenant. Specifically, the cloud marketplace obtains the management policy of the composition service, first provisions each cloud service in the composition service based on the management policy, and then performs subsequent management on the composition service based on the management policy.

In some implementations, in a process in which the tenant subscribes to the composition service in the cloud marketplace, the tenant selects, on the offering browsing interface provided by the cloud marketplace, a composition service to which needs to be subscribed. The selection operation may trigger the tenant device to send a subscription request to the cloud marketplace, the subscription request includes information about the composition service (for example, an identifier of the composition service). After receiving the subscription request, the cloud marketplace obtains a management policy of the composition service from the service management function based on the information about the composition service in the subscription request, and the cloud marketplace may display, based on the management policy, an operation interface used by the tenant to provision the composition service. Then, the tenant performs an operation on the operation interface to provision each cloud service in the composition service. Specifically, on the operation interface, the tenant may set a lifecycle of the composition service, and set a lifecycle of each cloud service. The lifecycle of each cloud service is set based on a relationship that is between the lifecycle of each cloud service and the lifecycle of the composition service and that is limited in the lifecycle policy of the composition service.

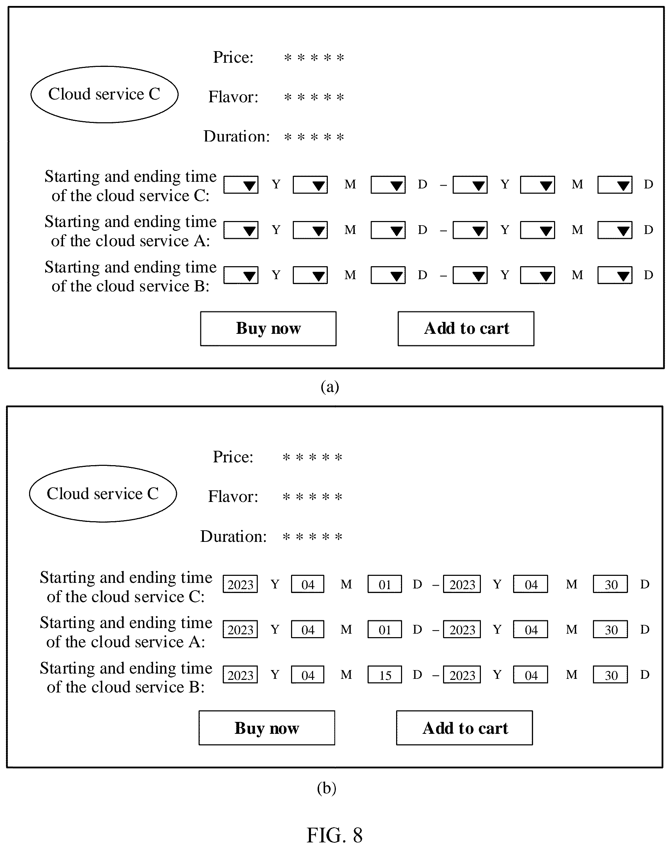

For example, it is assumed that a cloud service A and a cloud service B are composited, and a cloud service obtained through composition is a cloud service C. FIG. 8 is an example of an operation interface for provisioning the cloud service C. (a) in FIG. 8 is an operation interface for subscribing to a composition service (which may also be understood as provisioning the composition service). The operation interface is generated based on a management policy of the composition service, and the operation interface includes a price of the cloud service C, a flavor, duration, and a selection control for a starting and ending time (including the start time and the expiration time) of the cloud service C, and selection controls for starting and ending times of the cloud service A and the cloud service B in the composition service.

Still refer to FIG. 8. It is assumed that an association relationship between the cloud service A and the cloud service B in the management policy of the cloud service C is that the cloud service A and the cloud service B are in a parent-child relationship, and a lifecycle policy is as follows: A lifecycle of the cloud service A is consistent with a lifecycle of the cloud service C, and a lifecycle of the cloud service B is inconsistent with the lifecycle of the cloud service C (that is, a start time of the cloud service B is later than a start time of the cloud service C and/or an expiration time of the cloud service B is earlier than an expiration time of the cloud service C). The tenant fills in related information in (a) in FIG. 8, for example, selects the flavor, the duration, and the starting and ending time of the cloud service C. As shown in (b) in FIG. 8, the start time of the cloud service C entered by the tenant is April 1, 2023, and the expiration time is April 30, 2023.

The cloud service A and the cloud service B are in a parent-child relationship. The cloud service A is a parent service, and the cloud service B is a child service. A start time and an expiration time of the cloud service A are consistent with the start time and the expiration time of the cloud service C, and therefore, the start time of the cloud service A is April 1, 2023, and the expiration time is April 30, 2023. Optionally, the start time and the expiration time of the cloud service A may be entered by the tenant based on prompt information displayed by the cloud marketplace on the operation interface. For example, when the tenant enters the starting and ending time of the service A, prompt information "The starting and ending time of the cloud service A should be consistent with the starting and ending time of the cloud service C" may be displayed on the operation interface, or the start time and the expiration time of the cloud service A are automatically generated by the cloud marketplace based on the lifecycle policy, and the tenant does not need to manually perform entering.

Further, when the tenant enters the starting and ending time of the cloud service B, prompt information "The start time of the cloud service B is later than the start time of the cloud service C and/or the expiration time of the cloud service B is earlier than the expiration time of the cloud service C" may be displayed on the operation interface. For example, the start time of the cloud service B entered by the tenant based on the prompt information is April 15, 2023, and the expiration time is April 30, 2023.

It should be noted that the diagram of the interface in FIG. 8 is merely an example, and does not limit a service subscription interface. The interface may include more or less other content or more or fewer other controls.

In an implementation, the method for managing the composition service based on the management policy of the composition service specifically includes S4041.

S4041: Process, based on the lifecycle policy and the association relationship of the at least two associated cloud services in the composition service, a business request initiated by the tenant for the composition service.

The business request initiated by the tenant for the composition service may include any one of the following: a business renewal request, a business unsubscription request, a business freezing request, a business unfreezing request, or a business deletion request.

In this embodiment of this application, after the tenant provisions the composition service, on the operation interface of the cloud marketplace, the tenant may view the provisioned cloud service, and may trigger a business request for the provisioned cloud service, for example, renew some cloud services in the composition service or unsubscribe some cloud services in the composition service.

Optionally, when the association relationship between the at least two cloud services is a parent-child relationship, the lifecycle policy is that the lifecycle of the parent service is consistent with the lifecycle of the composition service, the lifecycle of the child service is also consistent with the lifecycle of the composition service, and the business request of the tenant is a renewal business for the child service. S4041 is implemented by performing S4041a and S4041b.

S4041a: In response to the business request of the tenant for renewing the child service, generate a processing result of the business request based on the lifecycle policy and the association relationship of the at least two associated cloud services, where the processing result includes first prompt information.

S4041b: Display the first prompt information, where the first prompt information is used to prompt the tenant to renew the parent service corresponding to the child service, and renewal duration of the child service is consistent with renewal duration of the parent service.

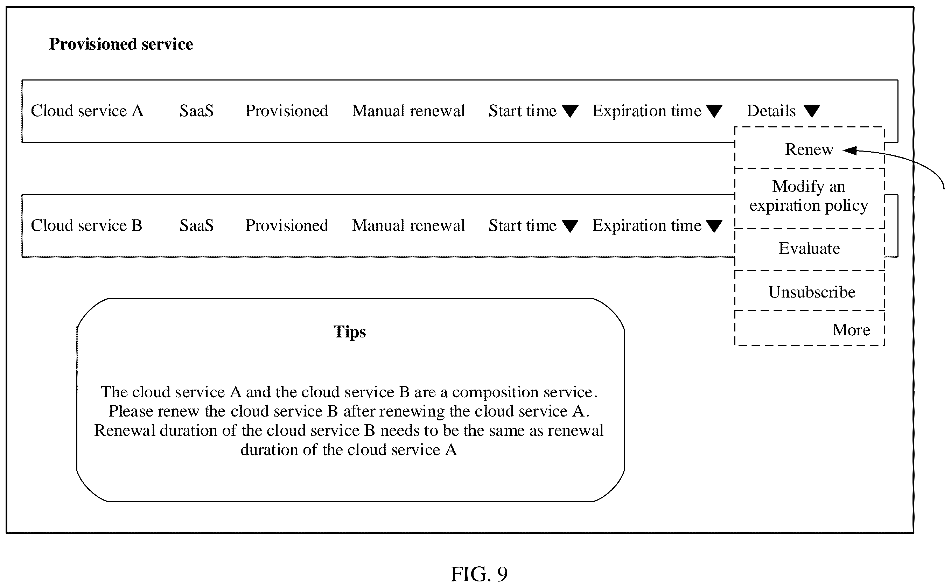

Refer to a diagram of an interface shown in FIG. 9. A composition service includes a cloud service A and a cloud service B. The cloud service A is a child service, and the cloud service B is a parent service. The tenant taps a service detail button corresponding to the cloud service A, and a plurality of options shown in FIG. 9 are displayed. The tenant selects a renewal option (that is, an operation performed by the tenant on the composition service is to renew a cloud service in the composition service). The cloud marketplace displays prompt information, and content of the prompt information is "The cloud service A and the cloud service B are the composition service. Please renew the cloud service B after renewing the cloud service A. Renewal duration of the cloud service B needs to be the same as renewal duration of the cloud service A". The cloud service A depends on the cloud service B. Therefore, after the cloud service A is renewed, the cloud service B needs to be renewed based on a lifecycle policy. Otherwise, if only the cloud service A is renewed, and the cloud service B is not renewed, the cloud service A cannot be run after the cloud service B expires.

In an implementation, when the association relationship between the at least two cloud services in the composition service is a parent-child relationship, the lifecycle policy is that a lifecycle of a parent service is consistent with a lifecycle of the composition service, a lifecycle of a child service is also consistent with the lifecycle of the composition service, and the business request of the tenant is a business request for unsubscribing from the parent service. S4041 is implemented by performing S4041c and S4041d.

S4041c: In response to the business request of the tenant for unsubscribing from the parent service, generate a processing result of the business request based on the lifecycle policy and the association relationship of the at least two associated cloud services, where the processing result includes second prompt information.

S4041d: Display the second prompt information, where the second prompt information is used to prompt for unsubscribing from the child service before the parent service is unsubscribed from.

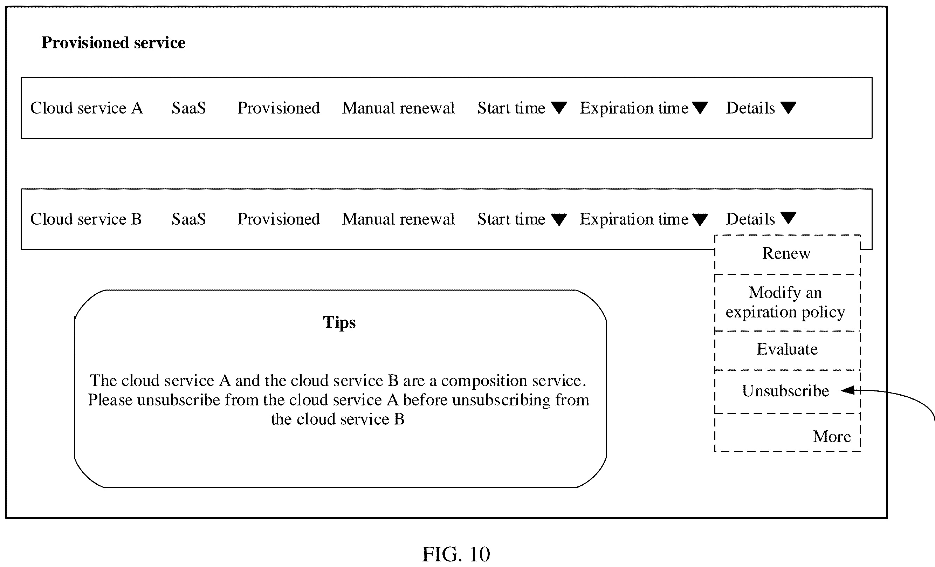

Refer to a diagram of an interface shown in FIG. 10. A composition service includes a cloud service A and a cloud service B. The cloud service A is a child service, and the cloud service B is a parent service. The tenant taps a service detail button corresponding to the cloud service B, and a plurality of options shown in FIG. 10 are displayed. The tenant selects an unsubscription option (that is, an operation performed by the tenant on the composition service is to unsubscribe from a cloud service in the composition service). The cloud marketplace displays prompt information, and content of the prompt information is "The cloud service A and the cloud service B are a composition service. Please unsubscribe from the cloud service A before unsubscribing from the cloud service B". The cloud service A depends on the cloud service B. Therefore, before the cloud service B is unsubscribed from, the cloud service A needs to be unsubscribed from first. Otherwise, after the cloud service B is unsubscribed from, the cloud service A cannot be run, resulting in a waste of resources.

In this embodiment of this application, interface parameters included in the subscription request, the business renewal request, the business unsubscription request, the business freezing request, the business unfreezing request, or the business deletion request may include interface parameters shown in Table 1.

**Table 1**

| Parameter name | Optional/Mandatory | Parameter type | Parameter length | Meaning |
|---|---|---|---|---|
| activity | M (Mandatory) | String | 20 | Interface request identifier, which is used to distinguish interface request scenarios |
| timeStamp | M | String | 20 | Timestamp when a request is initiated, where a UTC time is used |
| customerInfo | M | String | 512 | Customer information |
| businessId | M | String | 64 | Business ID, where for each request, the business ID is different |
| orderIdLine | M | String | 64 | Order line information |
| skuCode | O (optional) | String | 64 | Product flavor identifier |
| OfferingID | M | String | 64 | Offering identifier |
| resourceType | M | String | 20 | Independent resource: Independency |
| | | | | Auxiliary resource: auxiliary |
| charging Type | M | String | 20 | Charging type: |
| | | | | Independent charging: Y |
| | | | | Subordinate charging: N |
| StartTime | O | String | 20 | Start time |
| expireTime | O | String | 20 | Expiration time |
| resourceTag | O | String | 512 | Resource policy tag |

The interface request identifier is used to identify whether a request is subscription, renewal, unsubscription, freezing, unfreezing, or deletion.

In conclusion, in the service management method according to this embodiment of this application, the cloud marketplace publishes the composition service from the cloud management platform, where the composition service includes the at least two associated cloud services; obtains the management policy of the composition service from the cloud management platform, where the management policy of the composition service includes the association relationship between the at least two associated cloud services and/or the lifecycle policy of the at least two associated cloud services; and provides the composition service for the tenant, and manages the composition service based on the management policy of the composition service when the tenant performs an operation on the composition service. In the method, complex service integration does not need to be performed on the plurality of cloud services. Instead, the management policy of the composition service including the plurality of cloud services is obtained, and the composition service is managed based on the management policy. Actually, the plurality of cloud services are still independent services, and the plurality of cloud services are equivalent to the composition service based on the management policy, so that cloud services can be managed more conveniently. In addition, in the method, a framework capability of compositing services is provided. There is no need to perform complex service integration, and there is no need to perform service composition scenario by scenario, so that service composition efficiency can be improved.

Further, an embodiment of this application further provides a service management method. For at least two cloud services purchased in the cloud marketplace, the tenant may composite the at least two cloud services into a composition service. Alternatively, for a cloud service purchased in the cloud marketplace and a cloud service purchased by the tenant offline, the tenant may composite the cloud service purchased in the cloud marketplace and the cloud service purchased by the tenant offline into one composition service.

For example, the first cloud service and the second cloud service are composited. The tenant may perform a service composition operation on an operation interface that is for service composition and that is provided by the cloud marketplace, and in response to an operation of adding the associated second cloud service to the first cloud service by the tenant, the cloud marketplace obtains the lifecycle of the first cloud service, the lifecycle of the second cloud service, and the association relationship between the first cloud service and the second cloud service; and stores the lifecycle of the first cloud service, the lifecycle of the second cloud service, and the association relationship as the management policy of the composition service, where the management policy of the composition service is used to manage the composition service.

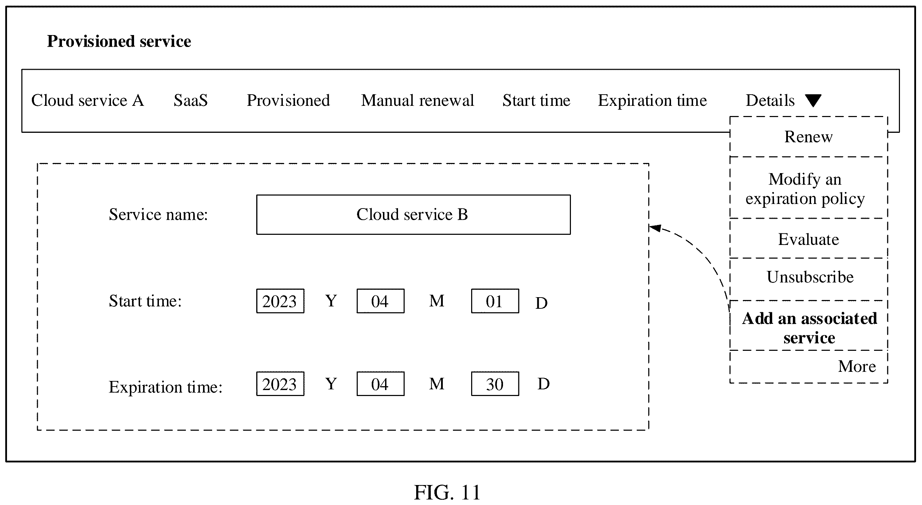

For example, it is assumed that the first cloud service is a cloud service purchased by the tenant in the cloud marketplace, and the second cloud service is a service purchased by the tenant offline. As shown in FIG. 11, a process of compositing the first cloud service and the second cloud service into one composition service through an operation performed by the tenant may be as follows: On an interface of a service provisioned by the tenant in the cloud marketplace, the tenant taps a service detail button corresponding to the first cloud service, and a plurality of options shown in FIG. 11 are displayed. The tenant selects an option for adding an associated service, and the cloud marketplace displays a dialog box for adding the associated service. In the dialog box, the tenant may enter a name of the second cloud service purchased offline, and the start time and the expiration time of the second cloud service.

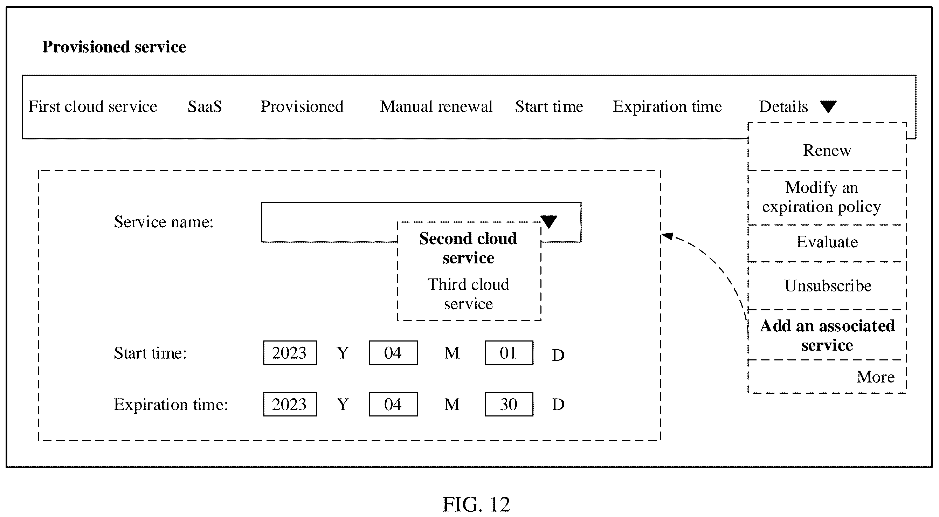

For another example, it is assumed that the first cloud service is a cloud service purchased by the tenant in the cloud marketplace, and the second cloud service is also a cloud service purchased by the tenant in the cloud marketplace. As shown in FIG. 12, a process of compositing the first cloud service and the second cloud service into one composition service through an operation performed by the tenant may be as follows: On an interface of a service provisioned by the tenant in the cloud marketplace, the tenant taps a service detail button corresponding to the first cloud service or the second cloud service (the following uses an example in which the tenant taps the service detail button corresponding to the first cloud service for description), and a plurality of options shown in FIG. 12 are displayed. The tenant selects an option for adding an associated service, and the cloud marketplace displays a dialog box for adding the associated service. In the dialog box, the tenant selects the second cloud service from purchased services, and then the cloud marketplace may obtain the start time and the expiration time of the second cloud service and automatically generate the start time and the expiration time of the second cloud service in the dialog box. The tenant does not need to manually perform entering.

Subsequently, when processing the business request initiated by the tenant for the composition service, the cloud marketplace may prompt the tenant with related information based on the management policy of the composition service.

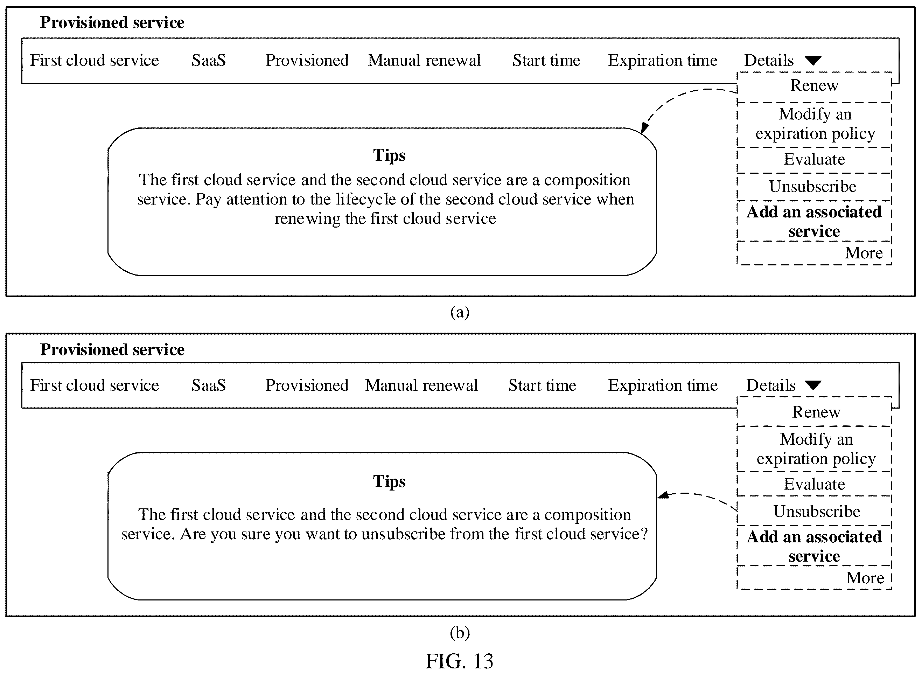

For example, as shown in (a) in FIG. 13, when the tenant renews the first cloud service, the cloud marketplace may pop up a prompt box to inform the tenant that the first cloud service and another service (for example, the second cloud service) are the composition service, and the lifecycle of the second cloud service needs to be considered when the tenant renews the first cloud service, for example, "The first cloud service and the second cloud service are a composition service. Pay attention to the lifecycle of the second cloud service when renewing the first cloud service" may be displayed in the prompt box. Alternatively, whether to renew the service needs to be considered. As shown in (b) in FIG. 13, when the tenant unsubscribes from the first cloud service, the cloud marketplace may pop up a prompt box to inform the tenant that the first cloud service and another service (for example, the second cloud service) are the composition service, and whether to continue to unsubscribe from the first cloud service, for example, "The first cloud service and the second cloud service are a composition service. Are you sure you want to unsubscribe from the first cloud service?" may be displayed in the prompt box.

According to the service management method provided in this embodiment of this application, the cloud marketplace may provide a service composition function for the tenant. In this way, the tenant may flexibly composite at least two cloud services into one composition service as required, and the tenant may define a management policy of the composition service. When the tenant subsequently performs an operation on the composition service, the cloud marketplace manages the composition service based on the management policy. In the method, complex service integration does not need to be performed on the plurality of cloud services. Instead, the management policy of the composition service including the plurality of cloud services is obtained, and the composition service is managed based on the management policy. Actually, the plurality of cloud services are still independent services, and the plurality of cloud services are equivalent to the composition service based on the management policy, so that cloud services can be managed more conveniently. In addition, in the method, a framework capability of compositing services is provided. There is no need to perform complex service integration, and there is no need to perform service composition scenario by scenario, so that service composition efficiency can be improved.

It may be understood that, to implement the foregoing functions of the cloud marketplace, a communication apparatus (for example, a computing device) that runs the functions of the cloud marketplace includes corresponding hardware structures and/or software modules for performing the functions. A person skilled in the art should easily be aware that, in composition with methods and steps of the examples described in embodiments disclosed in this specification, embodiments of this application may be implemented by hardware or a composition of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of embodiments of this application.

In embodiments of this application, the communication apparatus including the cloud marketplace function may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In practice, another division manner may be used.

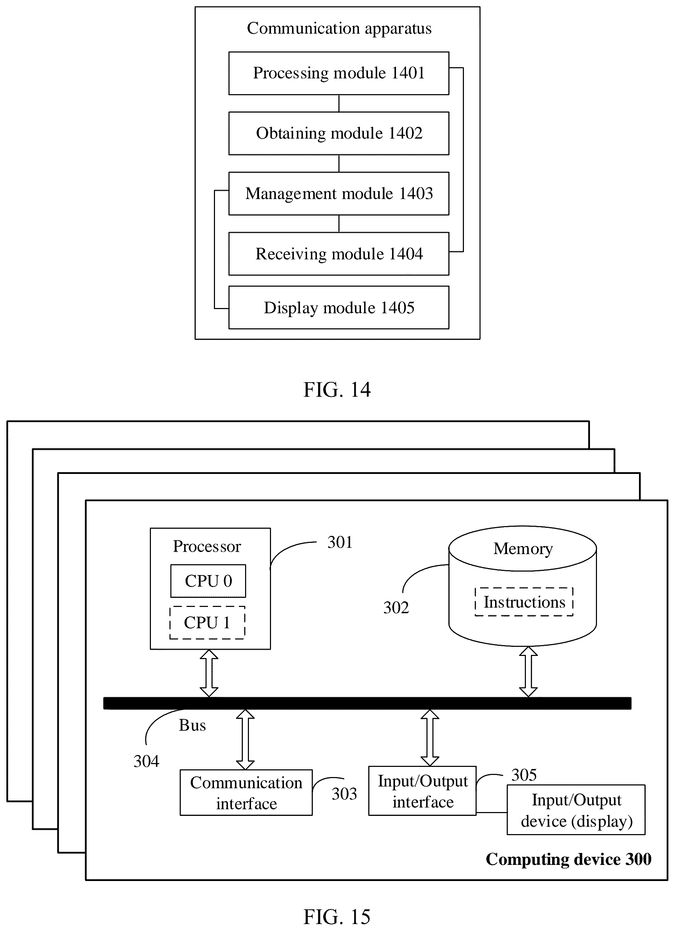

When each functional module is obtained through division based on each corresponding function, FIG. 14 is a possible diagram of a structure of the communication apparatus in the foregoing embodiments. The communication apparatus includes a processing module 1401, an obtaining module 1402, and a management module 1403.

The processing module 1401 is configured to perform S401 in the foregoing method embodiment. The obtaining module 1402 is configured to perform S402 in the foregoing method embodiment. The management module 1403 is configured to perform S403 and S404 in the foregoing method embodiment.

Optionally, the communication apparatus provided in this embodiment of this application further includes a receiving module 1404. The receiving module 1404 is configured to receive a publishing request of the composition service from a cloud management platform, where the publishing request includes a management policy of a composition service.

Optionally, the management module 1403 is specifically configured to perform S4041 (including S4041a and S4041c) in the foregoing method embodiment.

Optionally, the communication apparatus provided in this embodiment of this application further includes a display module 1405. The display module 1405 is configured to perform S4041b and S4041d in the foregoing method embodiment.

The various modules of the communication apparatus can also be used to perform other actions in the foregoing method embodiments. All related content of the steps in the foregoing method embodiments may be cited in function descriptions of the corresponding functional modules. Details are not described herein again.

For more details of implementing the functions by the modules included in the communication apparatus, refer to descriptions in the foregoing method embodiments. Details are not described herein again. Embodiments in this specification are all described in a progressive manner, for same or similar parts in embodiments, refer to these embodiments, and each embodiment focuses on a difference from other embodiments.

The functions of the communication apparatus shown in FIG. 14 may be implemented by the at least one computing device 300 shown in FIG. 3. The memory 302 of the computing device stores executable program code, the processor 301 executes the executable program code to separately implement functions of the processing module 1401, the obtaining module 1402, the management module 1403, the receiving module 1404, and the display module 1405, to implement the service management method. In other words, the memory 302 stores instructions used by the communication apparatus to perform the service management method.

Optionally, the processing module 1401, the obtaining module 1402, the management module 1403, the receiving module 1404, and the display module 1405 may all be implemented by using software, or may be implemented by using hardware.

For example, the following uses the processing module 1401 as an example to describe an implementation of the processing module 1401. Similarly, for implementations of the obtaining module 1402, the management module 1403, the receiving module 1404, and the display module 1405, refer to the implementation of the processing module 1401.

When the processing module 1401 is implemented by using software, the processing module may be an application program or a code block run on a computer device. The computer device may be at least one of computing devices such as a physical host, a virtual machine, and a container. Further, there may be one or more computer devices. For example, the processing module 1401 may be an application run on a plurality of hosts/virtual machines/containers. It should be noted that the plurality of hosts/virtual machines/containers used to run the application may be distributed in a same availability zone (availability zone, AZ), or may be distributed in different AZs. The plurality of hosts/virtual machines/containers used to run the application may be distributed in a same region (region) or may be distributed in different regions. Generally, one region may include a plurality of AZs.

Similarly, the plurality of hosts/virtual machines/containers used to run the application may be distributed in a same virtual private cloud (virtual private cloud, VPC), or may be distributed in a plurality of VPCs. Generally, one region may include a plurality of VPCs, and one VPC may include a plurality of AZs.

When the processing module 1401 is implemented by hardware, the processing module 1401 may include at least one computing device, for example, a server. Alternatively, the processing module 1401 may be a device implemented by using an application-specific integrated circuit (application-specific integrated circuit, ASIC) or a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any composition thereof.

The plurality of computing devices included in the processing module 1401 may be distributed in a same AZ, or may be distributed in different AZs. The plurality of computing devices included in the processing module 1401 may be distributed in a same region, or may be distributed in different regions. Similarly, the plurality of computing devices included in the processing module 1401 may be distributed in a same VPC, or may be distributed in a plurality of VPCs. The plurality of computing devices may be any composition of computing devices such as a server, an ASIC, a PLD, a CPLD, an FPGA, and a GAL.

It should be noted that any one of the processing module 1401, the obtaining module 1402, the management module 1403, the receiving module 1404, and the display module 1405 may be configured to perform some or all of the steps in the service management method provided in embodiments of this application.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 15, the computing device cluster includes the at least one computing device 300. For the structure of the computing device 300, refer to FIG. 3 and the descriptions corresponding to FIG. 3. Memories 302 in the one or more computing devices 300 in the computing device cluster may store same instructions used by the communication apparatus to perform the service management method.

In some possible implementations, the one or more computing devices 300 in the computing device cluster may alternatively be configured to execute some instructions used to perform the service management method in the communication apparatus. In other words, a composition of the one or more computing devices 300 may be jointly configured to execute the instructions used to perform the service management method in the communication apparatus.

It should be noted that the memories 302 of different computing devices 300 in the computing device cluster may store different instructions used to perform some functions of the communication apparatus. In other words, the instructions stored in the memories 302 in different computing devices 300 may implement functions of one or more of the processing module 1401, the obtaining module 1402, the management module 1403, the receiving module 1404, and the display module 1405. For example, a memory in one computing device stores instructions used to perform functions of the processing module 1401, the obtaining module 1402, and the management module 1403, and a memory in another computing device stores instructions used to perform functions of the display module 1405.

In some possible implementations, one or more computing devices in the computing device cluster may be connected through each communication interface (for example, the communication interface 303 shown in FIG. 3) of another computing device.

In some possible implementations, the one or more computing devices in the computing device cluster may be connected through a network. The network may be a wide area network, a local area network, or the like. Each computing device in the computing device cluster is connected to a network through a communication interface in each computing device.

All or a part of the foregoing embodiments may be implemented by using software, hardware, firmware, or any composition thereof. When a software program is used to implement embodiments, embodiments may be implemented completely or partially in a form of computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drive, SSD)), or the like.

The foregoing descriptions about implementations allow a person skilled in the art to clearly understand that, for the purpose of convenient and brief description, division of the foregoing functional modules is taken as an example for illustration. In actual application, the foregoing functions can be allocated to different modules and implemented as a required, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into the modules or units is merely logical function division and may be other division during actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected as required to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, like a flash memory, a removable hard disk, a read-only memory, a random access memory, a magnetic disk, or an optical disc.

The foregoing descriptions are merely specific implementations of this application, but are not intended to limit the protection scope of this application. Any variation or replacement in the technical scope disclosed in this application shall fall in the protection scope of this application. Therefore, the protection scope of this application shall be subject to the protection scope of the claims.

## Claims

1. A service management method, wherein the method comprises:
publishing a composition service from a cloud management platform, wherein the composition service comprises at least two associated cloud services;
obtaining a management policy of the composition service from the cloud management platform, wherein the management policy comprises an association relationship between the at least two associated cloud services and/or a lifecycle policy of the at least two associated cloud services; and
providing the composition service for a tenant, and managing the composition service based on the management policy when the tenant performs an operation on the composition service.

2. The method according to claim 1, wherein the obtaining the management policy of the composition service from the cloud management platform comprises:
receiving a publishing request of the composition service from the cloud management platform, wherein the publishing request comprises the management policy of the composition service.

3. The method according to claim 1 or 2, wherein
the association relationship between the at least two associated cloud services comprises at least a parent-child relationship and/or a sibling relationship.

4. The method according to any one of claims 1 to 3, wherein
the lifecycle policy of the at least two associated cloud services indicates a relationship between lifecycles of the at least two associated cloud services and a lifecycle of the composition service, wherein a lifecycle of a cloud service comprises a start time and an expiration time of the cloud service.

5. The method according to claim 4, wherein
the association relationship between the at least two associated cloud services is a parent-child relationship, and the relationship between the lifecycles of the at least two associated cloud services and the lifecycle of the composition service comprises: a lifecycle of a parent service in the at least two associated cloud services is consistent with the lifecycle of the composition service, and a lifecycle of a child service in the at least two associated cloud services is consistent with or inconsistent with the lifecycle of the composition service, wherein
that the lifecycle of the child service is inconsistent with the lifecycle of the composition service comprises: a validity period of the child service is shorter than a validity period of the composition service, and a start time of the child service is later than a start time of the composition service and/or an expiration time of the child service is earlier than an expiration time of the composition service; or
the association relationship between the at least two associated cloud services is a sibling relationship, and the relationship between the lifecycles of the at least two associated cloud services and the lifecycle of the composition service comprises: a union set of the lifecycles of the at least two associated cloud services is consistent with the lifecycle of the composition service.

6. The method according to any one of claims 1 to 5, wherein the managing the composition service based on the management policy comprises:
processing, based on the association relationship and the lifecycle policy, a business request initiated by the tenant for the composition service, wherein the business request comprises any one of the following: a business renewal request, a business unsubscription request, a business freezing request, a business unfreezing request, or a business deletion request.

7. The method according to claim 6, wherein the association relationship is a parent-child relationship; the lifecycle policy is that the lifecycle of the parent service is consistent with the lifecycle of the composition service, and the lifecycle of the child service is also consistent with the lifecycle of the composition service; and the business request initiated by the tenant for the composition service is a business request for renewing the child service; and
the processing, based on the association relationship and the lifecycle policy, the business request initiated by the tenant for the composition service comprises:
generating a processing result of the business request based on the association relationship and the lifecycle policy, wherein the processing result comprises first prompt information; and
displaying the first prompt information, wherein the first prompt information is used to prompt the tenant to renew the parent service corresponding to the child service, and renewal duration of the child service is consistent with renewal duration of the parent service.

8. The method according to claim 6, wherein the association relationship is a parent-child relationship; the lifecycle policy is that the lifecycle of the parent service is consistent with the lifecycle of the composition service, and the lifecycle of the child service is also consistent with the lifecycle of the composition service; and the business request is a business request for unsubscribing from the parent service; and
the processing, based on the association relationship and the lifecycle policy, the business request initiated by the tenant for the composition service comprises:
generating a processing result of the business request based on the association relationship and the lifecycle policy, wherein the processing result comprises second prompt information; and
displaying the second prompt information, wherein the second prompt information is used to prompt the tenant to unsubscribe from the child service before the tenant unsubscribes from the parent service.

9. The method according to any one of claims 1 to 8, wherein
the management policy further comprises a provisioning policy of the at least two associated cloud services, and the provisioning policy comprises that the at least two associated cloud services are provisioned in a preset sequence or the at least two associated cloud services are independently provisioned.

10. The method according to claim 9, wherein
when the association relationship between the at least two associated cloud services is a parent-child relationship, the provisioning policy of the at least two associated cloud services is that the at least two associated cloud services are provisioned in the preset sequence, and provisioning in the preset sequence comprises: provisioning the parent service first, and then provisioning the child service; or
when the association relationship between the at least two associated cloud services is a sibling relationship, the provisioning policy of the at least two associated cloud services is independent provisioning.

11. A communication apparatus, comprising a processing module, an obtaining module, and a management module, wherein
the processing module is configured to publish a composition service from a cloud management platform, wherein the composition service comprises at least two associated cloud services;
the obtaining module is configured to obtain a management policy of the composition service from the cloud management platform, wherein the management policy comprises an association relationship between the at least two associated cloud services and/or a lifecycle policy of the at least two associated cloud services; and
the management module is configured to: provide the composition service for a tenant, and manage the composition service based on the management policy when the tenant performs an operation on the composition service.

12. The communication apparatus according to claim 11, further comprising a receiving module, wherein
the receiving module is configured to receive a publishing request of the composition service from the cloud management platform, wherein the publishing request comprises the management policy of the composition service.

13. The communication apparatus according to claim 11 or 12, wherein
the association relationship between the at least two associated cloud services comprises at least a parent-child relationship and/or a sibling relationship.

14. The communication apparatus according to any one of claims 11 to 13, wherein
the management module is specifically configured to process, based on the association relationship and the lifecycle policy, a business request initiated by the tenant for the composition service, wherein the business request comprises any one of the following: a business renewal request, a business unsubscription request, a business freezing request, a business unfreezing request, or a business deletion request.

15. The communication apparatus according to claim 14, wherein the association relationship between the at least two associated cloud services is a parent-child relationship; the lifecycle policy is that a lifecycle of a parent service in the at least two associated cloud services is consistent with a lifecycle of the composition service, and a lifecycle of a child service in the at least two associated cloud services is also consistent with the lifecycle of the composition service; the business request initiated by the tenant for the composition service is a business request for renewing the child service; and the communication apparatus further comprises a display module;
the management module is specifically configured to generate a processing result of the business request based on the association relationship and the lifecycle policy, wherein the processing result comprises first prompt information; and
the display module is configured to display the first prompt information, wherein the first prompt information is used to prompt the tenant to renew the parent service corresponding to the child service, and renewal duration of the child service is consistent with renewal duration of the parent service.

16. The communication apparatus according to claim 14, wherein the association relationship between the at least two associated cloud services is a parent-child relationship; the lifecycle policy is that a lifecycle of a parent service in the at least two associated cloud services is consistent with a lifecycle of the composition service, and a lifecycle of a child service in the at least two associated cloud services is also consistent with the lifecycle of the composition service; the business request is a business request for unsubscribing from the parent service; and the communication apparatus further comprises a display module;
the management module is specifically configured to generate a processing result of the business request based on the association relationship and the lifecycle policy, wherein the processing result comprises second prompt information; and
the display module is configured to display the second prompt information, wherein the second prompt information is used to prompt the tenant to unsubscribe from the child service before the tenant unsubscribes from the parent service.

17. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 10.

18. A computer program product comprising instructions, wherein when the instructions are run by a computing device cluster, the computing device cluster is enabled to perform the method according to any one of claims 1 to 10.

19. A computer-readable storage medium, comprising computer program instructions, wherein when the computer program instructions are executed by a computing device cluster, the computing device cluster performs the method according to any one of claims 1 to 10.
